# EUROPEAN PATENT APPLICATION

(11) **EP 3 666 581 A1**
(43) Date of publication of application: **17.06.2020**
(21) Application number: 18869826.0
(22) Date of filing: 27.08.2018
(51) Int. Cl.: B60L 5/38

(54) **CURRENT COLLECTOR FOR MAGLEV VEHICLE**

(30) Priority: 26.10.2017 CN 201711014610
(71) Applicant: CRRC Zhuzhou Locomotive Co., Ltd., Zhuzhou, Hunan 412001 (CN)
(72) Inventor: PENG, Baolin, Zhuzhou Hunan 412001 (CN); ZHANG, Yanlin, Zhuzhou Hunan 412001 (CN); FENG, Ye, Zhuzhou Hunan 412001 (CN); ZHANG, Haifeng, Zhuzhou Hunan 412001 (CN); LIN, Ping, Zhuzhou Hunan 412001 (CN); CHEN, Mingguo, Zhuzhou Hunan 412001 (CN); CHEN, Minjian, Zhuzhou Hunan 412001 (CN); LI, Jun, Zhuzhou Hunan 412001 (CN); ZHOU, Jie, Zhuzhou Hunan 412001 (CN); YANG, Wenchao, Zhuzhou Hunan 412001 (CN); SUN, Ning, Zhuzhou Hunan 412001 (CN); WANG, Qiuhong, Zhuzhou Hunan 412001 (CN)
(74) Representative: Laufhütte, Dieter
(86) International application number: PCT/CN2018/102487
(87) International publication number: WO 2019/080629

(57) **Abstract**

A current collector for a maglev vehicle comprises a base (1), a lifting bow assembly (2) disposed on the base (1), and a bow head assembly (3) disposed on the lifting bow assembly (2). The bow head assembly (3) comprises a bow head support (4) connected to the lifting bow assembly (2), a buffering cylinder body (5) disposed on the bow head support (4), a guide rod (6) in sliding fit with the buffering cylinder body (5), and a sliding plate (7) fixed to the guide rod (6) and used for being in electrical contact with a contact rail. A pressure regulation valve (8) used for controlling a pressure of the buffering cylinder body (5) to be maintained at a preset pressure value is disposed between the buffering cylinder body (5) and a pressure source corresponding to the buffering cylinder body (5). By arranging the pressure regulation valve between the buffering cylinder body and the pressure source corresponding to the buffering cylinder body, when the sliding plate is in contact with the contact rail, the contact strength is always maintained at the preset pressure valve and a fast response is made to high-frequency vibrations of the sliding plate caused by unevenness of the contact rail, thereby improving the current collection stability of the current collector

## Description

The present application claims the priority to Chinese Patent Application No. 201711014610.7, titled "CURRENT COLLECTOR FOR MAGLEV VEHICLE", filed with the China National Intellectual Property Administration, on October 26, 2017, which is incorporated herein by reference in its entirety.

### FIELD

The present application relates to the technical field of maglev vehicles, and in particular to a current collector for a maglev vehicle.

### BACKGROUND

With the development of social, the development concepts of urban rail transportation such as energy saving and environment-friendly are continuously improved, and maglev vehicles are thereby developed. The maglev vehicle refers to a vehicle that uses electromagnetic force as a source of levitation force. The vehicle is suspended a certain distance above a rail and is propelled by the electromagnetic force, and travels forward without friction between the vehicle and the rail.

The maglev vehicle obtains current through contact between a current collector mounted on a side portion of a bottom of the vehicle and a contact rail. The maglev vehicle has advantages of being green and environment-friendly, strong climbing capacity, small turning radius, and low noise. Due to the above advantages, the maglev vehicle becomes more and more popularized.

At present, the current collector mainly used in a medium-low-speed maglev vehicle is a current collector mounted on a side portion of a third-rail. In the process that the current collector comes into contact with the contact rail to obtain the current, it is required to ensure that the current collector and the contact rail have good isolation and locking functions to ensure stable current collection. Although the current collector and the contact rail can achieve contact and disengagement, the acting pressure during contact is unstable, and, due to the uneven installation of the contact rail, high-frequency vibration occurs when a contact strip of the current collector slides along the contact rail at a high speed, so that stability of the current collection is poor.

In summary, a technical problem to be urgently solved by those skilled in the art is how to solve the problem that the stability of the current collection of the current collector of the maglev vehicle, especially for a fast maglev vehicle at a 160 kilometer speed grade, is poor.

### SUMMARY

An object of the present application is to provide a current collector for a maglev vehicle to improve the stability of the current collection of the current collector.

To achieve the object, a current collector for a maglev vehicle is provided according to the present application, which includes a base, a lifting pantograph assembly arranged on the base, and a pantograph-head assembly arranged on the lifting pantograph assembly. The pantograph-head assembly includes a pantograph-head bracket connected to the lifting pantograph assembly, a buffering cylinder arranged on the pantograph-head bracket, a guide rod in sliding fit with the buffering cylinder, and a contact strip fixed to the guide rod and configured to contact with a contact rail and receive power. Further, a pressure regulating valve configured to control a pressure of the buffering cylinder to be maintained at a preset pressure is provided between the buffering cylinder and a pressure source corresponding to the buffering cylinder.

Preferably, a return spring configured to pull the guide rod back to the buffering cylinder is further arranged at an end of the guide rod in cooperation with the buffering cylinder.

Preferably, a support plate, a pull rod seat and a fixing block are arranged on the base. The lifting pantograph assembly includes a lifting mechanism and a drive cylinder configured to drive the lifting mechanism.

Preferably, both the drive cylinder and the buffering cylinder are air cylinders, and air sources of the buffering cylinder and the drive cylinder are different; the air source corresponding to the buffering cylinder is an uninterrupted air supply; and an air-path port configured to lift and lower a pantograph is arranged on the drive cylinder, and the air source corresponding to the drive cylinder is a short-time air source.

Preferably, the lifting mechanism includes an upper arm, a lower arm arranged in parallel with the upper arm, and a tension spring;
one end of the upper arm is hinged to the support plate, another end of the upper arm is hinged to the pantograph-head bracket, and the one end of the upper arm hinged to the support plate is provided with a hook, a pantograph-lifting stop rod and a pantograph-lowering push rod abutting against a main push rod of the drive cylinder;
one end of the lower arm is hinged to the pull rod seat, and another end of the lower arm is hinged to the pantograph-head bracket;
one end of the tension spring is fixed to the hook, and another end of the tension spring is fixed to the fixing block; and
when the lifting mechanism is lifted to a predetermined position, the pantograph-lifting stop rod abuts against a position-limiting stopper provided on the base.

Preferably, the position-limiting stopper and the pull rod seat are a same component.

Preferably, the lower arm is an elastic pull rod.

Preferably, the pantograph-lowering push rod is a ball-head rod.

Preferably, the drive cylinder is further provided with a locking device, and when the main push rod of the drive cylinder reaches the maximum stroke, the locking device locks the main push rod.

Preferably, the drive cylinder is further provided with a manual unlocking device, and the manual unlocking device is configured to unlock the locking device when there is no pressure in the drive cylinder.

Compared with the introduction of the background art, the current collector for the maglev vehicle includes a base, a lifting pantograph assembly arranged on the base, and a pantograph-head assembly arranged on the lifting pantograph assembly. The pantograph-head assembly includes a pantograph-head bracket connected to the lifting pantograph assembly, a buffering cylinder arranged on the pantograph-head bracket, a guide rod in sliding fit with the buffering cylinder, and a contact strip fixed to the guide rod and configured to contact with a contact rail and receive power. Further, a pressure regulating valve configured to control a pressure of the buffering cylinder to be maintained at a preset pressure is provided between the buffering cylinder and a pressure source corresponding to the buffering cylinder. During the travelling of the vehicle, there will be high-frequency vibration of the contact strip perpendicular to a surface of the rail. This vibration is transmitted to the buffering cylinder through the guide rod, so that the pressure in the buffering cylinder continuously changes. According to the structure of the current collector, by providing the pressure regulating valve between the buffering cylinder and the corresponding pressure source, the pressure regulating valve discharges excess pressure exceeding the preset pressure when the pressure increases, and the pressure regulating valve performs pressure filling when the pressure decreases. Therefore, when the contact strip on the guide rod is in contact the contact rail, the contact force is always maintained at the preset pressure and can quickly respond to the high-frequency vibration of the contact strip caused by the uneven contact rail, thereby improving the stability of the current collection of the current collector.

### BRIEF DESCRIPTION OF THE DRAWINGS

Figure 1 is a schematic view of an overall structure of a current collector for a maglev vehicle according to an embodiment of the present application;
Figure 2 is a schematic structural view of a pantograph-head assembly according to an embodiment of the present application;
Figure 3 is a schematic front view of the current collector for the maglev vehicle according to an embodiment of the present application;
Figure 4 is a schematic structural view of a base of the current collector for the maglev vehicle according to an embodiment of the present application;
Figure 5 is a schematic structural view of an upper arm of the current collector for the maglev vehicle according to an embodiment of the present application;
Figure 6 is a schematic structural view of a lower arm provided as an elastic pull rod according to an embodiment of the present application; and
Figure 7 is a schematic structural view of a drive cylinder according to an embodiment of the present application, when the drive cylinder and a buffering cylinder have a same pressure source and both are air cylinders.

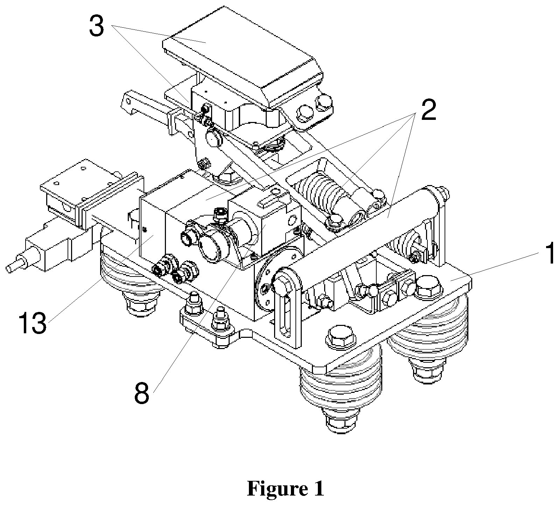

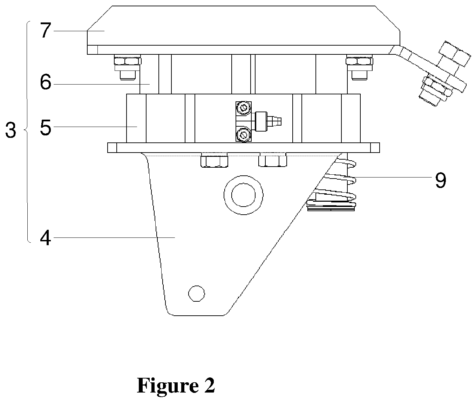

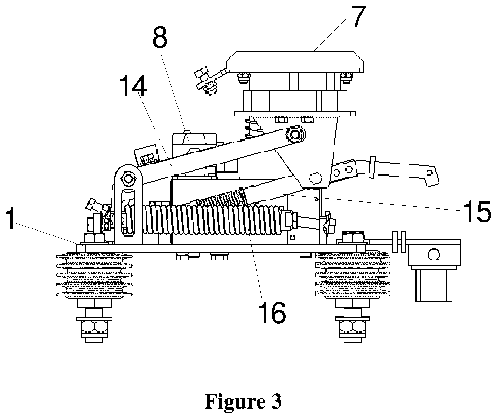

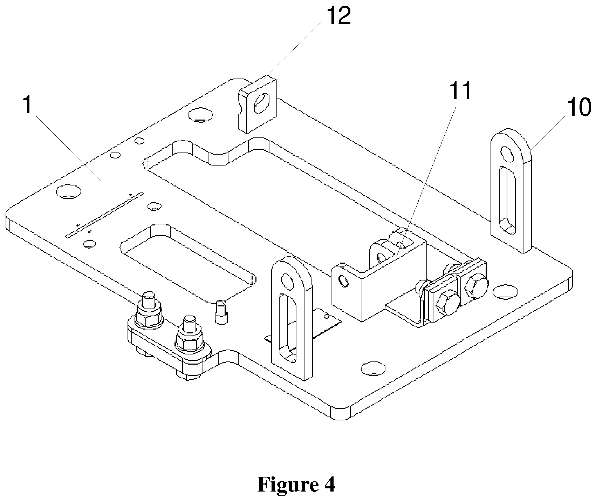

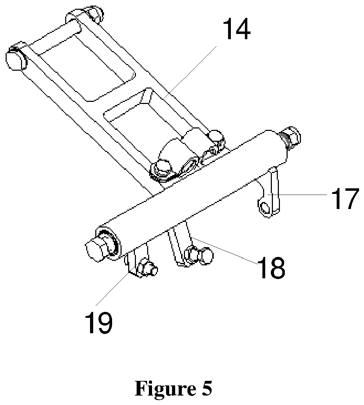

**Reference numerals in Figures 1 to 7:**

| | |
|---|---|
| 1 base, | 2 lifting pantograph assembly, |
| 3 pantograph-head assembly, | 4 pantograph-head bracket, |
| 5 buffering cylinder, | 6 guide rod, |
| 7 contact strip, | 8 pressure regulating valve, |
| 9 return spring, | 10 support plate, |
| 11 pull rod seat, | 12 fixing block, |
| 13 drive cylinder, | 14 upper arm, |
| 15 lower arm, | 16 tension spring, |
| 17 hook, | 18 pantograph-lifting stop rod, |
| 19 pantograph-lowering push rod, | 20 first pull-rod end, |
| 21 second pull-rod end, | 22 spring, |
| 23 insulation-detecting rod, | 24 main push rod, |
| 25 manual unlocking device, | 26 pantograph-head air supply port, |
| 27 pantograph-lifting air inlet, | 28 pantograph-lowering air inlet. |

### DETAILED DESCRIPTION OF EMBODIMENTS

A core of the present application is to provide a current collector for a maglev vehicle to improve the stability of the current collection of the current collector.

In order to make the person skilled in the art have a better understanding of the technical solutions according to the present application, the present application is described hereinafter in further detail in conjunction with the drawings and embodiments.

As shown in Figures 1 to 7, the current collector for the maglev vehicle provided by embodiments of the present application includes a base 1, a lifting pantograph assembly 2 arranged on the base 1, and a pantograph-head assembly 3 arranged on the lifting pantograph assembly 2. The pantograph-head assembly 3 includes a pantograph-head bracket 4 connected to the lifting pantograph assembly 2, a buffering cylinder 5 arranged on the pantograph-head bracket 4, a guide rod 6 in sliding fit with the buffering cylinder 5, and a contact strip 7 fixed to the guide rod 6 and configured to contact with a contact rail and receive power. Further, a pressure regulating valve 8 configured to control a pressure of the buffering cylinder 5 to be maintained at a preset pressure is provided between the buffering cylinder 5 and a pressure source corresponding to the buffering cylinder.

It should be noted that, the preset pressure refers to a pressure at which the current collection condition is the best, according to the design requirements of the vehicle, when the contact strip is in contact with the contact rail. The pressure is generally referred to as a nominal contact pressure. In addition, the buffering cylinder generally is an air cylinder, which is because, according to the design of the pressure regulating valve of the air cylinder, the exhaust gas can be directly discharge into the atmosphere. Apparently, it can be understood that the air cylinder is only an example of the buffering cylinder of the present application. The buffering cylinder may be a hydraulic cylinder, but in this case, it needs to consider a problem of storing the discharged fluid when the pressure is regulated by the pressure regulating valve. In addition, the pressure regulating valve generally is a precise pressure regulating valve, so that the pressure regulation is more precise.

During the travelling of the vehicle, there will be high-frequency vibration of the contact strip perpendicular to a surface of the rail. This vibration is transmitted to the buffering cylinder through the guide rod, so that the pressure in the buffering cylinder continuously changes. According to the structure of the current collector, by providing the pressure regulating valve between the buffering cylinder and the corresponding pressure source, the pressure regulating valve discharges excess pressure exceeding the preset pressure when the pressure increases, and the pressure regulating valve performs pressure filling when the pressure decreases. Therefore, when the contact strip on the guide rod is in contact the contact rail, the contact force is always maintained at the preset pressure, thereby improving the stability of the current collection of the current collector.

In some specific embodiments, a return spring 9 configured to pull the guide rod 6 back to the buffering cylinder may be further arranged at an end of the guide rod 6 in cooperation with the buffering cylinder 5. By providing the return spring, the return spring can apply a pullback force to the guide rod after pressure supply to the buffering cylinder is stopped at the end of the current collection, so that the contact strip returns to a position in contact with an upper surface of the buffering cylinder, and the contact strip is thereby more stable and less prone to shake. An arrangement position of the return spring may be arranged on a lower surface of the buffering cylinder, and a resilience force generated by compression of the spring is used as the pullback force of the guide rod. Alternatively, the return spring may be arranged on the upper surface of the buffering cylinder, the resilience force generated by extension of the return spring is used as the pullback force of the guide rod. In practical design, the arrangement position of the return spring can be selected according to the specific structural design space.

In some more specific embodiments, a support plate 10, a pull rod seat 11 and a fixing block 12 are arranged on the base 1. The lifting pantograph assembly 2 includes a lifting mechanism and a drive cylinder 13 configured to drive the lifting mechanism. Apparently, it can be understood that the manner of driving the lifting mechanism by the drive cylinder is merely an example of driving manners of the lifting mechanism according to the embodiments of the present application. The driving manner of the lifting mechanism may be other driving manners commonly used by those skilled in the art such as linear motor driving.

In a preferred embodiment, both the drive cylinder 13 and the buffering cylinder 5 are air cylinders, and air sources of the buffering cylinder 5 and the drive cylinder 13 are different. In general, the air source corresponding to the buffering cylinder 5 is an uninterrupted air supply, an air-path port configured to lift and lower the pantograph is arranged on the drive cylinder 13, and the air source corresponding to the drive cylinder 13 is a short-time air source, so that different pressure sources realize different functional control.

The lifting mechanism includes an upper arm 14, a lower arm 15 arranged in parallel with the upper arm 14, and a tension spring 16; one end of the upper arm 14 is hinged to the support plate 10, another end of the upper arm 14 is hinged to the pantograph-head bracket 4, and the one end of the upper arm 14 hinged to the support plate 10 is provided with a hook 17, a pantograph-lifting stop rod 18 and a pantograph-lowering push rod 19 abutting against a main push rod 24 of the drive cylinder 13; one end of the lower arm 15 is hinged to the pull rod seat 11, and another end of the lower arm 15 is hinged to the pantograph-head bracket 4; one end of the tension spring 16 is fixed to the hook 17, and another end of the tension spring 16 is fixed to the fixing block 12; and when the lifting mechanism is lifted to a predetermined position, the pantograph-lifting stop rod 18 abuts against a position-limiting stopper provided on the base. It should be noted that the tension spring always keeps a tensile force, and the tensile force of the tension spring acts on the hook, so as to cause the upper arm hinged to the support plate to rotate and further cause the lower arm to rotate together, so that the pantograph-head bracket hinged to the upper arm and the lower arm generates an action of lifting the pantograph. Apparently, it can be understood that the above is merely an example of the lifting mechanism according to the embodiments of the present application. The lifting mechanism may be other lifting mechanisms commonly used by those skilled in the art such as a piston-cylinder structure that is perpendicular to the pantograph-head bracket, which drives the pantograph-head bracket to move up and down through telescopic movement of a piston rod. In addition, it should be noted that the pantograph-lifting stop rod may be a bolt structure, and a height of lifting the pantograph can be fine-tuned by adjusting a screwing length of a bolt.

In some more specific embodiments, in order to save the design space of the current collector and simplify the arrangement of design positions of the components, the position-limiting stopper and the pull rod seat 11 may be a same component. Apparently, it can be understood that, the arrangement that the position-limiting stopper and the pull rod seat 11 are the same component is only a preferred embodiment of the position-limiting stopper according to the embodiments of the present application. Alternatively, the position-limiting stopper may be a separate component. However, it is preferred that the position-limiting stopper and the pull rod seat 11 are designed as the same component in the embodiments of the present application.

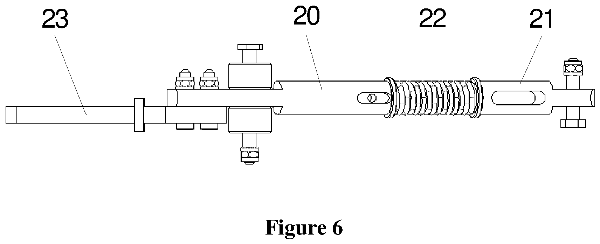

In some more specific embodiments, the lower arm 15 may be an elastic pull rod. The contact strip is generally a rigid block, and the contact rail is uneven during mounting and manufacturing, for example, a certain height difference between an expansion joint and an intermediate joint of the contact rail, and an elbow joint at an end of the contact rail. Therefore, the movement of the contact strip when the contact strip is in contact with the contact rail is not straight. In addition, a positive pressure is exerted by the contact strip on the contact rail. In order to ensure that the rigid contact strip slides smoothly on the contact rail and passes through the joint, the contact strip needs to have a freedom of back and forth swing. Therefore, the lower arm is designed as the elastic pull rod. A general structure of the elastic pull rod is as shown in Figure 6, which includes a first pull-rod end 20, a second pull-rod end 21 and a spring 22 arranged between the first pull-rod end 20 and the second pull rod-end 21. The first pull-rod end 20 is hinged to the pantograph-head bracket 4, and the second pull-rod end 21 is hinged to the pull rod seat 11. Due to the design of the spring 22, the length of the elastic pull rod is variable, and the elastic pull rod can be extended or compressed according to the forces acting on the front and rear ends of the contact strip. The spring 22 can maintain the balance of the moment, so that the contact strip can keep a good contact when the contact strip swings back and forth with the contact rail. In addition, an insulation detecting rod 23 configured to detect the insulation performance of the current collector may be further provided on the elastic pull rod.

In a further embodiment, the pantograph-lowering push rod 19 may be a ball-head rod. Since the upper arm rotates during the lifting and lowering of the pantograph, the pantograph-lowering push rod not only has horizontal displacement, but also has displacement in a vertical direction. By designing the pantograph-lowering push rod as the ball-head rod, the main push rod can always be in good contact with the pantograph-lowering push rod when the main push rod is in contact with the pantograph-lowering push rod.

In a further embodiment, the drive cylinder 13 is further provided with a locking device, and when the main push rod 24 of the drive cylinder 13 reaches the maximum stroke, the locking device locks the main push rod 24, thereby ensuring that the main push rod will not be interfered by external forces.

In a further embodiment, the drive cylinder 13 is further provided with a manual unlocking device 25, and the manual unlocking device 25 is configured to unlock the locking device when there is no pressure in the drive cylinder 13. It should be noted that a normal unlocking process of the locking device can be realized by controlling the pressure in the drive cylinder. By providing the manual unlocking device according to the present application, the main push rod can be unlocked and retracted by operating the manual unlocking device, and the pantograph can thereby be lifted, when the current collector is in a pantograph-down state, and there is a need to lift the pantograph, and there is no air pressure.

In order to provide those skilled in the art with better understanding of the technical solutions of the present application, an embodiment in which both the buffering cylinder and the drive cylinder are air cylinders is taken as an example to illustrate the lifting and lowering of the pantograph of the current collector.

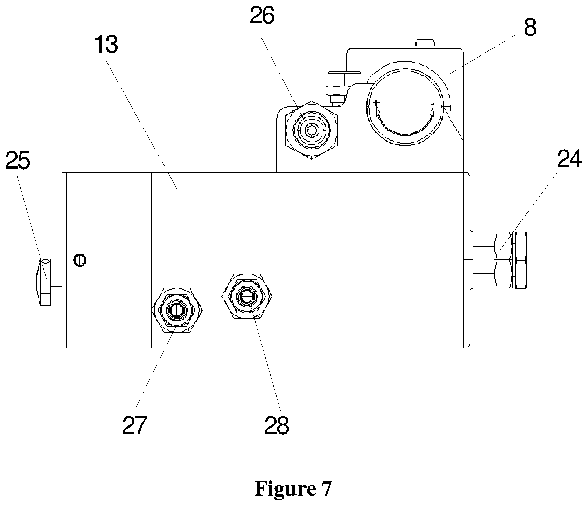

As shown in Figure 7, in a case that both the buffing cylinder body and the drive cylinder are air cylinders, and the air sources thereof are different, a pantograph-head air inlet 26 is provided on the buffering cylinder, and a pantograph-lifting air inlet 27 and a pantograph-lowering air inlet 28 are provided on the drive cylinder. The pantograph-head air inlet 26 is supplied with air from a pressure air source, and the pantograph-lifting air inlet 27 and the pantograph-lowering air inlet 28 are supplied with air from a same air source. According to the needs of lifting and lowering the pantograph, the air supply is controlled by a vehicle-mounted solenoid valve.

Under normal conditions, the current collector is in the pantograph-down state, and the main push rod 24 reaches the maximum stroke and is locked. When it is required to lift the pantograph, the pantograph-lifting air inlet 27 is supplied with air, the main push rod 24 is unlocked through an internal air path, then the main push rod 24 retracts under the pressure of the drive cylinder, and the upper arm rotates upward under the pulling force of the tension spring 16, so that the lifting mechanism is lifted, thereby driving the pantograph-head assembly to rise; When the pantograph needs to be lowered, the pantograph-lowering air inlet 28 is supplied with air, the main push rod 24 is extended by the pressure of the drive cylinder and presses against the pantograph-lowering push rod 18, so that the upper arm rotates downward, and the pantograph-head assembly is lowered. When the main push rod 24 reaches the maximum stroke, the main push rod 24 is locked by the locking device, and the pantograph is lowered into place, thereby realizing power isolation of the current collector. The main push rod 24 can be unlocked and retracted by operating the manual unlocking device 25, and the pantograph can thereby be lifted, when the current collector is in the pantograph-down state, and there is a need to lift the pantograph, and there is no air pressure.

Under normal conditions, a pantograph-head air inlet is not supplied with air, and the contact strip is at a lowest position under the action of the return spring 9; and when the pantograph-head air inlet is supplied with air, the guide rod 6 lifts up the contact strip 8. An air pressure path of the pantograph-head assembly is as follows: from the pantograph-head air supply port 26 to the pressure regulating valve 8 and then to the pantograph-head air inlet. The pressure source enters the buffering cylinder from to provide pressure to the buffering cylinder from the pantograph-head air inlet provided on the pantograph-head assembly after passing through the drive cylinder, the pantograph-head air supply port 26, and the pressure regulating valve 8.

The current collector for the maglev vehicle according to the present application is described in detail hereinbefore. It should be noted that, the embodiments in this specification are described in a progressive way, each of which emphasizes the differences from others. For the same or similar parts among various embodiments, one may refer to the description of other embodiments.

It should further be noted that relationship terminologies herein such as "first", "second" are only used to distinguish one entity or operation from another entity or operation, rather than necessitating or implying an actual relationship or order between the entities or operations. Furthermore, terms such as "include", "comprise" or any other variations thereof are intended to be non-exclusive. Therefore, an article or device including a series of elements includes not only the elements but also other elements that are not enumerated, or further includes the elements inherent for the article or device. Unless explicitly limited otherwise, the statement "comprising (including) a..." does not exclude the case that other similar elements other than the enumerated elements may exist in the article or device.

The principle and embodiments of the present application are described through specific examples herein. The description of the above-described embodiments is merely used to facilitate understanding the method and core idea of the present application. It should be noted that, for those skilled in the art, various improvements and modifications may be further made to the present application without departing from the principle of the present application, and these improvements and modifications also fall within the protection scope defined by the claims of the present application.

## Claims

1. A current collector for a maglev vehicle, comprising a base (1), a lifting pantograph assembly (2) arranged on the base (1), and a pantograph-head assembly (3) arranged on the lifting pantograph assembly (2), wherein
the pantograph-head assembly (3) comprises a pantograph-head bracket (4) connected to the lifting pantograph assembly (2), a buffering cylinder (5) arranged on the pantograph-head bracket (4), a guide rod (6) in sliding fit with the buffering cylinder (5), and a contact strip (7) fixed to the guide rod (6) and configured to contact with a contact rail and receive power, and a pressure regulating valve (8) configured to control a pressure of the buffering cylinder (5) to be maintained at a preset pressure is provided between the buffering cylinder (5) and a pressure source corresponding to the buffering cylinder.

2. The current collector for the maglev vehicle according to claim 1, wherein a return spring (9) configured to pull the guide rod (6) back to the buffering cylinder is further arranged at an end of the guide rod (6) in cooperation with the buffering cylinder (5).

3. The current collector for the maglev vehicle according to claim 1, wherein a support plate (10), a pull rod seat (11) and a fixing block (12) are arranged on the base (1), and the lifting pantograph assembly (2) comprises a lifting mechanism and a drive cylinder (13) configured to drive the lifting mechanism.

4. The current collector for the maglev vehicle according to claim 3, wherein
both the drive cylinder (13) and the buffering cylinder (5) are air cylinders, air sources of the buffering cylinder (5) and the drive cylinder (13) are different, and the air source corresponding to the buffering cylinder (5) is an uninterrupted air supply; and
an air-path port configured to lift and lower a pantograph is arranged on the drive cylinder (13), and the air source corresponding to the drive cylinder (13) is a short-time air source.

5. The current collector for the maglev vehicle according to claim 3, wherein the lifting mechanism comprises an upper arm (14), a lower arm (15) arranged in parallel with the upper arm (14), and a tension spring (16);
one end of the upper arm (14) is hinged to the support plate (10), another end of the upper arm (14) is hinged to the pantograph-head bracket (4), and the one end of the upper arm (14) hinged to the support plate (10) is provided with a hook (17), a pantograph-lifting stop rod (18) and a pantograph-lowering push rod (19) abutting against a main push rod (24) of the drive cylinder (13);
one end of the lower arm (15) is hinged to the pull rod seat (11), and another end of the lower arm (15) is hinged to the pantograph-head bracket (4);
one end of the tension spring (16) is fixed to the hook (17), and another end of the tension spring (16) is fixed to the fixing block (12); and
when the lifting mechanism is lifted to a predetermined position, the pantograph-lifting stop rod (18) is configured to abut against a position-limiting stopper provided on the base.

6. The current collector for the maglev vehicle according to claim 5, wherein the position-limiting stopper and the pull rod seat (11) are a same component.

7. The current collector for the maglev vehicle according to claim 5, wherein the lower arm (15) is an elastic pull rod.

8. The current collector for the maglev vehicle according to claim 5, wherein the pantograph-lowering push rod (19) is a ball-head rod.

9. The current collector for the maglev vehicle according to claim 3, wherein the drive cylinder (13) is further provided with a locking device, and when a main push rod (24) of the drive cylinder (13) reaches a maximum stroke, the locking device is configured to lock the main push rod (24).

10. The current collector for the maglev vehicle according to claim 9, wherein the drive cylinder (13) is further provided with a manual unlocking device (25), and the manual unlocking device (25) is configured to unlock the locking device when there is no pressure in the drive cylinder (13).
